# EUROPEAN PATENT APPLICATION

(11) **EP 2 255 890 A1**
(43) Date of publication of application: **01.12.2010**
(21) Application number: 09725529.3
(22) Date of filing: 12.03.2009
(51) Int. Cl.: B05C 13/02, B24B 9/14, G02B 1/10, G02B 5/23, G02C 7/10

(54) **CENTERING DEVICE FOR CIRCULAR MEMBER AND COATER EQUIPPED WITH THE SAME**

(30) Priority: 25.03.2008 JP 2008077690
(71) Applicant: Tokuyama Corporation, Shunan-shi, Yamaguchi 745-8648 (JP)
(72) Inventor: YAMAMOTO, Shuhei, Shunan-shi Yamaguchi 745-8648 (JP)
(74) Representative: Jackson, Martin Peter
(86) International application number: PCT/JP2009/054724
(87) International publication number: WO 2009/119323

(57) **Abstract**

[Abstract] To provide a coating device capable of easily attaining the centering of circular members such as lenses without causing the device to become complex. A portion for centering the center axis of the lens is provided on the front side of a lens-holding portion of the coating device, and a chute portion for feeding the lens is provided on the rear side thereof. The centering portion is provided with a support shaft for swinging the holding portion, and a circular eccentric cam is provided on the lower surface of the holding member. Upon rotating the circular eccentric cam, the holding member is tilted, and the lens placed on the chute portion slides onto the centering portion where the center position of the lens in the right-and-left direction thereof is attained.

## Description

### Technical Field:

This invention relates to a device for centering circular members having a coating, that is capable of applying, for example, a photochromic coating onto such lenses as spectacle lenses maintaining a high quality, and a coating device having the same.

### Background Art:

A photochromic substance is a material that changes color upon the irradiation with light. The photochromic substance has a property of reversibly changing its structure depending upon the presence of ultraviolet rays and of varying absorption spectrum. This is the property of a substance; i.e., if an isomer is irradiated with light of a particular wavelength, a simple chemical substance reversibly forms an isomer having a different absorption spectrum. The another isomer thus formed exhibits the color of the initial isomer upon being heated or irradiated with light of another wavelength.
The lenses of the photochromic spectacles are the ones that utilize the property of the photochromic material. In the outdoors, the photochromic spectacles are irradiated with light containing ultraviolet rays such as sunlight and, therefore, the lenses quickly develop a color so as to work as sunglasses. In the indoors where there is no irradiation of light, the colors fade and the lenses work as ordinary transparent spectacles.

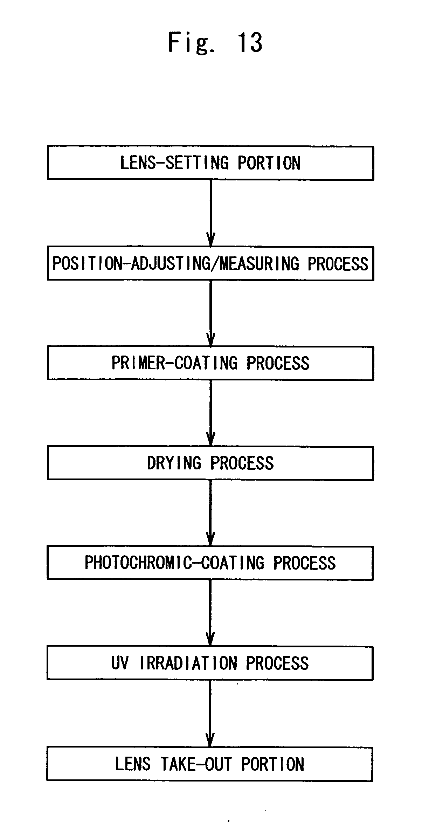

The photochromic spectacles are produced by applying a photocurable coating solution containing a photochromic substance (hereinafter often called photochromic coating solution) onto the surfaces of the lenses and curing the coating solution. The coating operation is, for example, carried out according to a procedure as shown in Fig. 13.
Namely, an operator sets the lenses to a lens-setting portion. Here, the lenses are set at their central portions to predetermined positions of the lens-setting portion. A measuring process measures the thickness of the lenses and the gradient of the lenses. Next, a primer-coating process applies a primer coating solution onto the lens surfaces, and a drying process dries the primer coating solution to form a primer coating. A photochromic-coating process applies a photochromic coating solution onto the lens surfaces. The lenses to which the photochromic coating solution is applied are put to a UV-irradiation process where the photochromic coating solution is irradiated with UV so as to be cured to thereby form a photochromic coating, and the finished product lenses are transferred to a lens take-out portion of the apparatus.

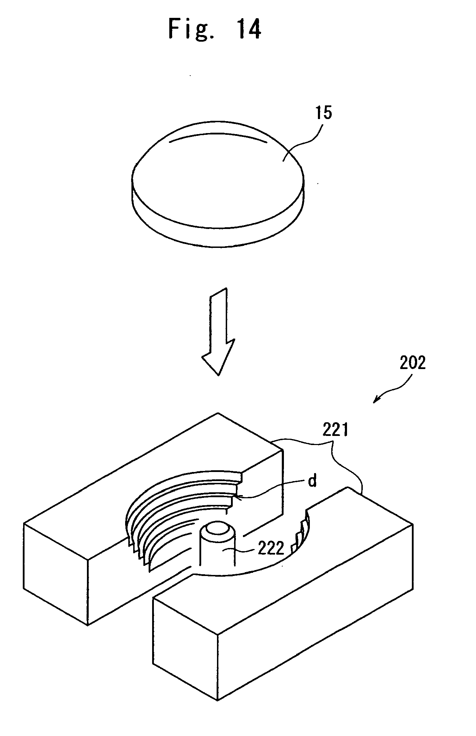

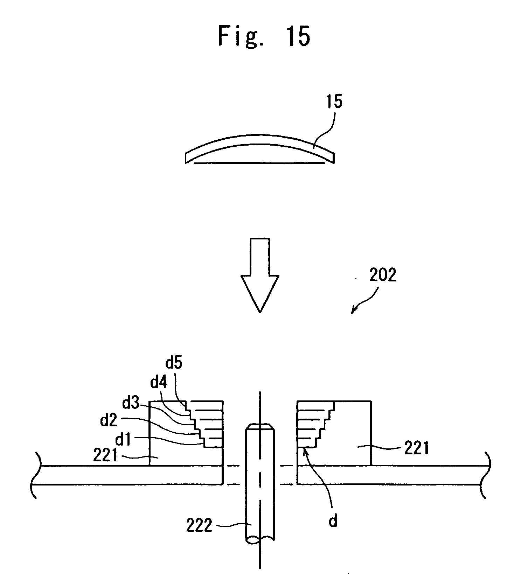

Fig. 14 and Fig. 15 illustrate a jig 202 for centering a starting lens (lens of before being coated). The centering jig 202 includes a pair of block plates 221 having a curved surface of an arcuate shape in the central portion thereof maintaining a gap as viewed on a plane from the upper side. Each of the block plates 221 is forming stepped portions d(stepped portions d1 to d5 that will be described later are also collectively referred to as stepped portions d) that are arranged like a stairway and in concentric for centering the lens 15. The stepped portions d are formed to meet the outer circumferential shapes of sizes of the lenses 15, and are capable of centering a lens of a small diameter through up to a lens of a large diameter in order of the stepped portion d1 on the lowermost side to d2 d3, d9 up to d5.
The centering work is conducted by bringing the lower edge portions of the lenses 15 (edges on the back side of the lenses) into contact with the stepped portions d1 to d5 to meet the sizes of the lenses 15, whereby the lenses 15 are positioned at their centers. The positioning by the centering jig 202 serves as a reference for centering the lenses 15 in the subsequent works. The lenses 15 are placed by hand on the stepped portions d of the centering jig 202.

A centering rod 222 of a circular shape in transverse cross section is provided at the center of the stepped portions d of the pair of block plates 221. The centering rod 222 is erected with its end portion facing upward, and is so arranged that the central position of the centering rod 222 is in agreement with the centers of the stepped portions d1 to d5. Upon moving the centering rod 222 up, the lens 15 placed and positioned at the stepped portion d is supported by the end portion of the centering rod 222. The centering rod 222 can be moved up and down, and in a transverse direction by using a moving device that is not shown. The above centering jig has been disclosed in the following patent document 1.
- Patent document 1:: Japanese Unexamined Patent Publication JP-A-2007-175697

### Disclosure of the Invention:

### Problems that the Invention is to Solve:

The centering jig 202 according to the patent document 1 is forming stepped portions d1 to d5 that meet any diameters of the starting lenses. When the stepped portions d and the lens diameters are in agreement, the centers of the lenses 15 meet the center of the centering rod 222.
The lenses are put to the centering because of the reason that the rotational speed of the lenses and spreading the coating solution in the radial direction are determined in the primer-coating process and the photochromic-coating process depending upon the height of the lenses and the gradient of the lenses, and the subsequent works are affected if the centers of the lenses are deviated.

In practice, however, there are lenses having a number of kinds of diameters, and many lenses do not meet the diameters of the stepped portions d1 to d5. The lenses that do not meet the diameters of the stepped portions d are held in the stepped portions d that are larger than the diameters of the lenses, and the operator equalizes a gap between the outer circumference of the lens 15 and the arc of the stepped portion in an attempt to position and center the lens. However, the above manual centering method requires a skilled centering work technology by the operator as well as an increased amount of work. Therefore, the coating apparatus must be attended by a skilled operator, and a human cost is required, too.
It can be contrived to electrically center the lenses using, however, many sensors and complex operation for controlling the lenses.
The present invention was accomplished in view of the above circumstances, and provides a device for centering circular members capable of easily centering the circular members such as lenses without causing the device to become complex, and a coating device having the same.

### Means for Solving the Problems:

In order to achieve the above object, a device for centering circular members of the present invention comprises:
a holding member for holding circular members, the holding member having a portion for centering the center axis of the circular member (e.g., lens) on the front side and a chute portion for feeding the circular member to the centering portion on the rear side;
the centering portion having a semicircular portion of a given radius, a front end portion of the centering portion forming a limiting portion for specifying the center position of the circular member in the right-and-left direction thereof which is at right angles with the back-and-forth direction of the holding member; and
the holding member being provided with lift means which so tilts the holding member that the semicircular portion side becomes low and the chute portion side becomes high, and the holding member being so tilted that the circular member is transferred from the chute portion to the limiting portion of the centering portion.
According to the present invention, further, the semicircular portion of the centering portion forms stepped portions like a stairway having diameters increasing from the lower side toward the upper side in a manner of forming a plurality of the semicircular portions in concentric, the stepped portions being continuously formed from both end positions of the arcuate portions of the semicircular portions up to the chute portion on the rear side, and limiting portions are formed at the front end portions of the stepped portions of the centering portion so as to specify the center positions of the circular members in the right-and-left direction which is at right angles with the back-and-forth direction of the holding member. This embodiment makes it possible to attain the centering of a plurality of circular members having different diameters more accurately and continuously.
The device for centering circular members includes a handling device for moving the circular member that is transferred to the limiting portion of the centering portion, wherein a groove is formed penetrating up and down from a front end position of the centering portion to a center portion thereof, and an end of an adsorbing portion of the handling device that supports the bottom surface of the circular member moves up from under the centering portion, passes through the groove, and hands the circular member from the centering portion over to the adsorbing portion of the handling device.
In the device for centering circular members, the handling device is controlled by a control portion, and the control portion decides the center position of the circular member in the back-and-forth direction thereof from the size of the circular member that has been input in advance.
The device for centering circular members, further, has a circular member-measuring device for measuring the diameter of the circular member handed over to the adsorbing portion of the handling device, and decides the center position of the circular member in the back-and-forth direction thereof from a value of diameter measured by the circular member-measuring device
In the device for centering circular members, the circular member can be a starting material for a coated lens.
The device for centering circular members can be used for a coating device that holds the lens with its face facing upward on a spinning device that supports and spins the lens, in order to apply a photocurable coating solution onto the upper surface of the lens held on the spinning device.
In the coating device, the photocurable coating solution can be a photochromic coating solution, and the lens can be a lens on which a primer layer is formed.
A method of attaining the centering of circular members in the right-and-left direction thereof of the invention uses a device for centering circular members comprising a holding member having a portion for centering the center axis of the circular member on the front side and a chute portion for feeding the circular member to the centering portion on the rear side, the centering portion having a semicircular portion of a given radius, a front end portion of the centering portion forming a limiting portion for specifying the center position of the circular member in the right-and-left direction which is at right angles with the back-and-forth direction of the holding member, wherein the holding member is so tilted that the centering portion becomes low so that the circular member placed on the chute portion slides from the chute portion down to the centering portion, and the circular member is brought into contact with the limiting portion of the centering portion to specify the center position of the circular member in the right-and-left direction thereof.
In the method of centering circular members, the center position of the circular member in the back-and-forth direction thereof is determined by the operation of a control portion from a relationship between the size of the circular member measured in advance and the position of the limiting portion, the handling means controlled by the control portion is moved to move a portion (adsorbing portion) for supporting the circular member of the handling means to just under the center portion of the circular member, and the portion for supporting the circular member is moved up so that the portion for supporting the circular member supports the center portion of the circular member on the bottom surface side thereof.
In the method of centering circular members, the handling means controlled by the control portion is moved to the centering portion, the portion for supporting the circular member of the handling means is moved to just under the center position of the circular member in the right-and-left direction thereof, the portion for supporting the circular member is moved up so that the portion for supporting the circular member supports the center position of the circular member in the right and-left direction on the bottom surface side thereof, the portion for supporting the circular member is moved to the circular member-measuring device to hand the circular member over to a centering rod of the circular member-measuring device, and the circular member-measuring device measures a length (S) of from the center axis of the centering rod to the one end of the circular member in the back-and-forth direction and a length (T) of from the center axis of the centering rod to the other end of the lens in the back-and-forth direction, determines a deviation of the center position of the circular member in the back-and-forth direction from a difference between the lengths, and attains the center position of the circular member.

### Effects of the Invention:

According to the present invention, provision is made of a holding member for holding the circular member, the holding member having a portion for centering the center axis of the circular member on the front side and a chute portion for feeding the circular member to the centering portion on the rear side, the centering portion has a semicircular portion having a given radius, the semicircular portion forms stepped portions like a stairway having diameters increasing from the lower side toward the upper side in a manner to form a plurality of semicircular portions in concentric, the stepped portions are continuously formed from both end positions of the arcuate portions of the semicircular portions up to the chute portion on the rear side, limiting portions are formed at the front end portions of the stepped portions of the centering portion so as to specify the center positions of the circular members in the right-and-left direction which is at right angles with the back-and-forth direction of the holding member, the holding member is provided with lift means which so tilts the holding member that the semicircular portion side becomes low and the chute portion side becomes high, and the holding member is so tilted that the circular member is transferred from the chute portion to the limiting portion of the centering portion. Therefore, the operator is allowed to save work for centering the lenses, and the time for centering the circular members can be shortened.
Upon shortening the working time, two coating systems can be established in using the device for centering the circular members in the coating apparatus, and the coated lenses can be mass-produced. In coating the lenses, in particular, the coating solution is applied and is cured while holding the center portions of the lenses. Therefore, the device for centering the circular members of the invention exhibits distinguished effects.
According to the present invention, further, at least the center positions of the circular members in the right-and-left direction can be simply determined. Therefore, the invention can be applied to any other devices that work to attain the centering of the center axes of the circular members in addition to the devices for coating lenses.

### Brief Description of the Drawings:

[Fig. 1] is a plan view schematically illustrating a whole coating device according to an embodiment of the invention.
[Fig. 2] is a front view of a circular member accommodation unit arranged in the coating device of Fig. 1.
[Fig. 3] is a view of a holding member for holding the circular member accommodation unit of Fig. 2, wherein A is a plan view of the holding member and B is a back view thereof.
[Fig. 4] is a side view of the holding member of Fig. 2.
[Fig. 5] A is a perspective view of a state where the holding member of Fig. 2 is tilted, B is a perspective view of a state where a lens is placed on a chute portion of the holding member and is slid, and C is a perspective view of the holding member which is in a horizontal state.
[Fig. 6] is a plan view of a handling device (or second sub-carrier means) arranged in the coating device of Fig. 1.
[Fig. 7] is a plan view of a circular member-measuring device in the coating device shown in Fig. 1.
[Fig. 8] is a side view of the circular member-measuring device in the coating device shown in Fig. 1.
[Fig. 9] shows a laser projection portion and a receiving portion of the circular member-measuring device shown in Fig. 8, wherein A is a perspective view of a state where a centering rod supporting no lens is in a measuring area, B is a perspective view of a state where the centering rod supporting a lens is in the measuring area, and C is a perspective view of a state where an end portion of the lens is in the measuring area.
[Fig. 10] is a plan view of the laser projection portion and the receiving portion of the circular member-measuring device shown in Fig. 8 in a state where the rear end side of the lens in a direction in which it moves is passing through the measuring area.
[Fig. 11] is a side view of the circular member-measuring device in a state where the centers of the lens and the centering rod are deviated.
[Fig. 12] is a front view of an ultraviolet ray irradiation chamber arranged in a UV irradiation portion of Fig. 1.
[Fig. 13] is a flowchart illustrating a procedure of a photochromic-coating method.
[Fig. 14] is a perspective view of a conventional holding member for holding the circular member accommodation unit.
[Fig. 15] is a front view of the conventional holding member for holding the circular member accommodation unit. Description of Reference Numerals:

- 1: coating device
- 3: circular member-measuring portion
- 10: lens (circular member)
- 22: circular member-centering device
- 25a to 25f: holding members
- 27a: centering portion
- 27b: chute portion
- 27c: penetration groove
- 27d: limiting portion
- 28: circular eccentric cam
- 29: coil spring
- 31: handling device
- 45: circular member support unit
- 45c: adsorbing portion (portion for supporting circular members)
- 48: circular member-measuring device

### Best Mode for Carrying Out the Invention:

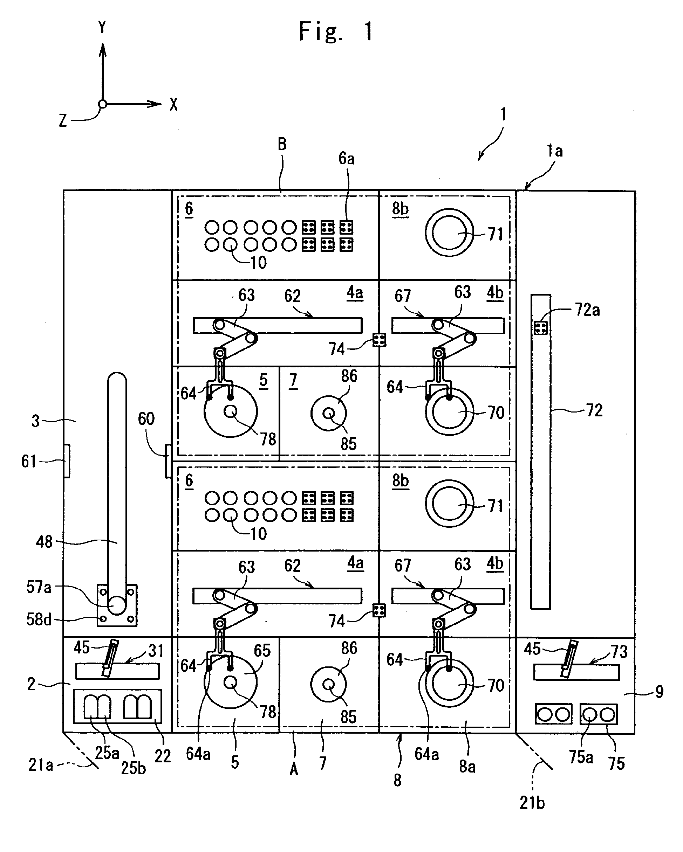

An embodiment of the invention will now be described with reference to the drawings as an example of using a preferred coating device. In this specification, the X-axis direction of the coating device of Fig. 1 is regarded to be the direction of width of the coating device, the Y-axis direction is regarded to be the back-and-forth direction (direction opposite to the arrow of Y-axis is regarded to be the front side), and the Z-axis direction (direction perpendicular to the surface of paper in Fig. 1) is regarded to be the up-and-down direction. Further, the following description deals with a case of using the device for coating lenses and, therefore, the circular members in the invention correspond to the starting lenses.
A body 1a of the coating device 1 shown in Fig. 1 is forming a coating line which comprises a circular member-measuring portion 3 for measuring the shape of the starting lens (as will be described later in detail, the circular member-measuring portion includes a circular member-measuring device 48), a primer-coating portion 5 for applying a primer solution onto the starting lens to prepare a first intermediate product lens having an undried primer coating, a drying portion 6 for drying the undried primer coating of the first intermediate product lens to prepare a second intermediate product lens having a dry primer coating, a photochromic-coating portion 7 for applying a photochromic coating solution (photocuring coating solution) onto the second intermediate product lens to prepare a third intermediate product lens having an uncured photochromic coating, and two UV irradiation portions 8a and 8b (UV irradiation portions 8) for irradiating the third intermediate product lens with UV to cure the uncured photochromic coating to obtain a product lens, along the flow of operation for coating the lenses. The coating line is, further, provided with a circular member false-placing portion 74 for false-placing the third intermediate product lens, and with a product circular member false-placing portion 72 for false-placing the product lens.

Among them, the primer-coating portion 5, drying portion 6, photochromic-coating portion 7, and UV irradiation portions 8a and 8b in this embodiment, are furnished with coating lines comprising two coating systems A and B surrounding imaginary lines in the drawing. It is desired that the primer-coating portions 5 and photochromic-coating portions 7 are the chambers independent from each other, and the temperature and humidity conditions best suited for the coating can be set in each of these chambers.
Here, the starting lens, first intermediate product lens, second intermediate product lens, third intermediate product lens and product lens stand for the lenses in the above-mentioned modes. In the following description, these lenses are simply referred to as lenses.

The coating device 1 has a circular member-feeding portion 2 arranged at a position upstream of the coating line in the device body. The circular member-feeding portion 2 is a place where the lenses are placed waiting for being primer- and photochromic-coated, and serves as a stock yard for storing the lenses that are prepared outside the device. Therefore, the circular member-feeding portion 2 is, usually, arranged in front of the device or by the side thereof for easy operation by the operator. It is desired to increase the degree of cleanness in the device for coating lenses in order to prevent foreign matters such as dust from adhering on the surfaces of the lenses or on the surfaces of the intermediate product lenses in the steps of the coating line. For this purpose, the front side wall of the circular member-feeding portion 2 in the coating device 1 is provided with an opening/closing door 21a for carrying the lenses therein from the exterior.

When used for the above lens-coating device 1, the circular member-centering device 22 of the invention is arranged in the circular member-feeding portion 2. That is, the circular member-feeding portion 2 is provided with the circular member-centering device 22 and a handling device 31 for carrying the lens (circular member) from the circular member-centering device 22 to the circular member-measuring portion 3 equipped with the circular member-measuring device 48.
In the present invention, when the center of the lens 10 can be accurately determined by the circular member-centering device 22, the handling device 31 is not necessarily required, and the circular member-centering device 22 only may suffice for the need. However, in case the center of the lens 10 cannot be accurately determined by the circular member-centering device 22 only, it is desired that the circular member-centering device of the invention includes the handling device 31 having a control portion or includes the circular member-measuring device 48 for measuring the diameter of the circular member in order to specify the center position of the circular member in the back-and-forth direction.

Two circular member-centering devices 22 are disposed in the circular member-feeding portion 2 in the coating device 1 shown in Fig. 1. The circular member-centering devices 22 may be disposed being fixed to the coating device 1 or may be of the cartridge type and disposed so as to be detachably attached to the coating device 1. When detachably disposed, it is desired that the circular member-centering devices 22 are disposed at predetermined positions of the circular member-feeding portion 2 by providing attachment guides or the like. This establishes a predetermined positional relationship to the handling device 31 fixed to the circular member-feeding portion 2, and makes it easy to control the handling device 31.
When the circular member-centering devices 22 are disposed in a fixed manner, the opening/closing door 21a is opened to place the lenses 10 on the circular member-centering devices 22. When the circular member-centering devices 22 are detachably disposed, on the other hand, the lenses 10 can be placed on the circular member-centering devices 22 on the outside of the coating device 1.

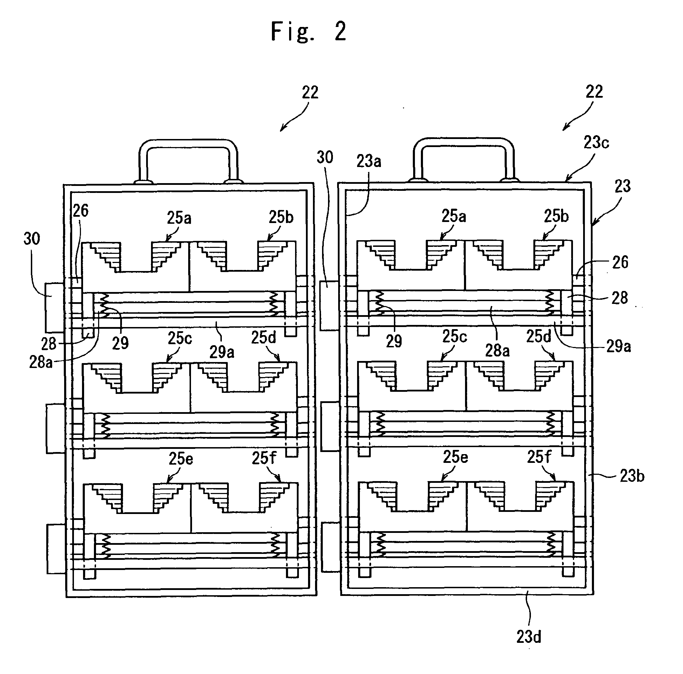

Fig. 2 is an enlarged view of the circular member-centering devices 22 as viewed from the front.
The pair of circular member-centering devices 22 has the same shape and, therefore, the one circular member-centering device 22 will be described. The circular member-centering device 22 has an outer frame 23 of a square shape which is constituted by right and left longitudinal frames 23a, 23b, and upper and lower transverse frames 23c, 23d.
In the circular member-centering device 22, circular member-holding members 25a to 25f (holding members 25a to 25f are often collectively referred to as holding member 25) are arranged between the right and left longitudinal frames 23a and 23b, the holding members 25a to 25f being of a three-staged structure including the holding members 25a and 25b at the upper stage, holding members 25c and 25d at the middle stage, and holding members 25e and 25f at the lower stage. In this embodiment, the neighboring holding members 25a and 25b in each stage are arranged as a pair in contact, which, however, may be arranged maintaining a gap.

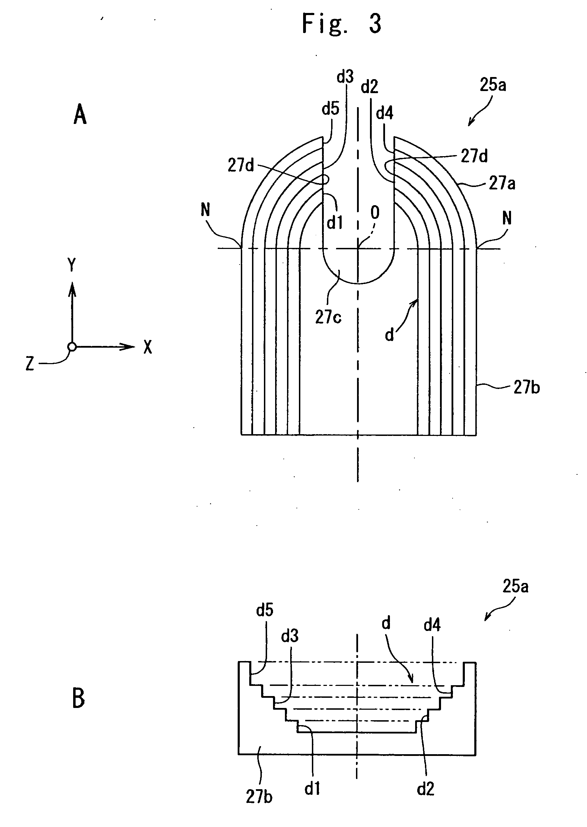

The holding members 25a to 25f are of the same shape, and only the one holding member 25a will be described. Referring to Fig. 3A which is a plan view of the holding member 25a from the upper direction, the holding member 25a is forming a centering portion 27a having a semicircular portion on the end side (front side), the centering portion 27a forming stepped portions (d1 to d5) (which are also collectively referred to as stepped portion d) arranged like a stairway and in concentric for centering the lens 10. The curved surfaces of the stepped portion d are formed having given radii of curvature of dissimilar diameters. If curved surfaces of the stepped portions d1 to d5 are extended, semicircles are formed having radii from the center point O, making it possible to position the lenses of small diameters up to the lenses of large diameters in order of from the lowest stepped portion d1 to d2, d3, d4 up to d5. A straight chute portion 27b is formed succeeding an end position N of the curved surfaces, and the stepped portion d is formed continuously from the centering portion 27a up to the chute portion 27b. At least the surface of the stepped portion d of the chute portion 27b is made of a slippery material without friction or is surface-treated.
In the foregoing was described the centering portion having the semicircular portion forming stepped portions of which the diameters increasing from the lower side toward the upper side. According to the present invention, however, the circular members can be sufficiently centered even with an embodiment in which the centering portion has no stepped portion, as a matter of course. Upon providing the holding member having the centering portion with the stepped portion as described above, however, the centering can be accurately effected at the time of treating a plurality of circular members of different diameters.
Described below is the circular member-centering device provided with the holding member having the centering portion with stepped portions.

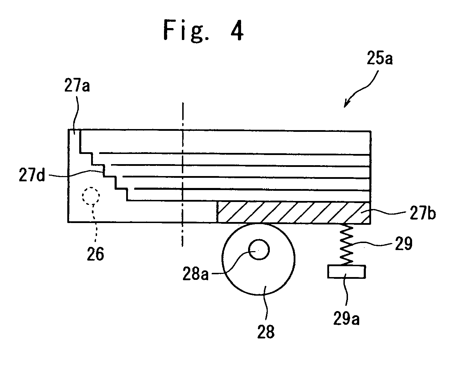

The centering portion 27a of the holding member 25a is forming a penetration groove 27c that penetrates through up and down from the front end of the centering portion 27a up to a portion beyond the center point O. The penetration groove 27c has a width which permits the up-and-down movement of the adsorbing portion 45c of the circular member-supporting unit 45 in the handling device 31 that will be described later. Limiting portions 27d (limiting portions 27d are formed in pairs for the stepped portions d1 to d5, but a reference numeral is attached to only one pair of limiting portions in Fig. 3A and a reference numeral is attached to only one limiting portion in Fig. 4) to which the side surface of the lens 10 come in contact, are formed in a portion where the stepped portions d1 to d5 of the holding member 25a intersect the penetration groove 27c at the front end position.

Referring to Fig. 2, the holding members 25a and 25b are integrally and rotatably supported by the right and left longitudinal frames 23a and 23b via a support shaft 26 that supports the side surfaces thereof. Referring to Fig. 4, a circular eccentric cam 28 is arranged nearly at a central position under the bottom surface of the holding member 25a in the back-and-forth direction thereof, and a rotary shaft 28a of the circular eccentric cam 28 is rotatably supported by the right and left side frames 23a and 23b. The rotary eccentric cam 28 supports the holding member 25a together with the support shaft 26. An upper end of a coil spring 29 is attached to the rear end side of the holding member 25a, and a lower end of the coil spring 29 is attached to a spring-attaching plate 29a that is supported by the right and left longitudinal plates 23a and 23b. The coil spring 29 is arranged in a state of being pulled, and is urging the rear end side of the holding member 25a toward the circular eccentric cam 28 at all times. The rotary shaft 28a of the circular eccentric cam 28 is coupled to a rotary shaft of a pulse motor though not shown.

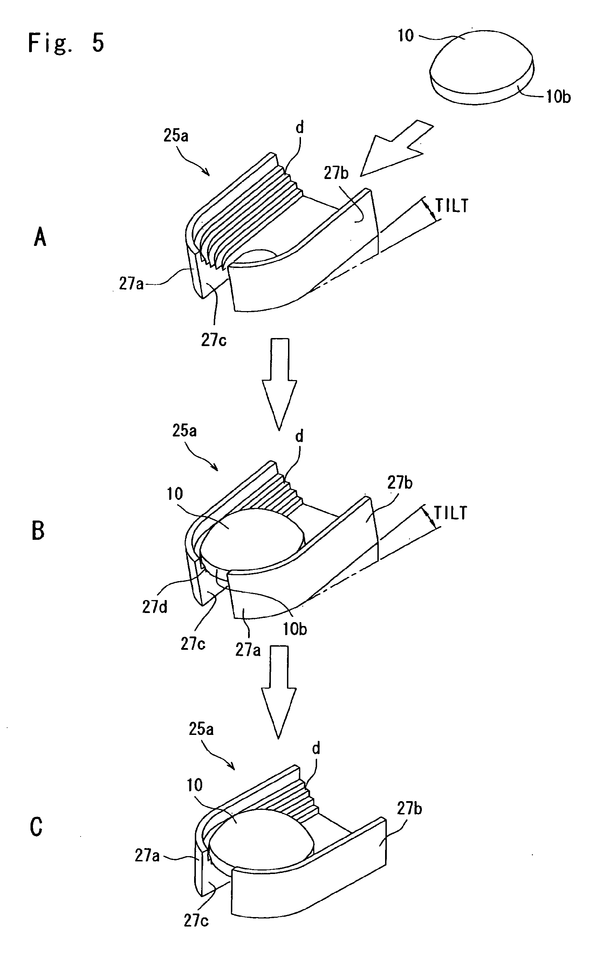

The circular eccentric cam 28 is so arranged that, in its initial state, the stepped portion is at the horizontal position and that, when rotated, the rear end side of the holding member 25a swings up and down with the support shaft 26 as an axis as shown in Fig. 5. That is, the stepped portion d of the holding member 25a is so tilted from its horizontal state that the front side of the stepped portion d becomes low. By rotating the circular eccentric cam 28 once, the stepped portion d can be returned back to the initial horizontal position.
As another method though not shown, an auxiliary member capable of moving up and down is attached to the lower end portion of the holding member on the side of the chute portion, and is moved up and down to tilt the holding member 25 and to return it back to the horizontal position.
It is, further, allowable to employ a method according to which the circular eccentric cam or the auxiliary member is disposed at the lower portion only of the circular member-centering device 22 in order to tilt the circular member-centering device 22 as a whole and to return it back to the horizontal position.

The circular member-centering device 22 is arranged in an aligned state so that the holding members 25a, 25c, 25e and 25b, 25d, 25f arranged up and down are in concentric about the center axis, and that the holding members 25a, 25b of the upper stage, holding members 25c, 25d of the middle stage and holding members 25e, 25f of the lower stage arranged in the transverse direction possess the same horizontal positions. Upon arranging a plurality of lenses (circular members) on the circular member-centering devices 22 straight in the horizontal direction and/or in the up-and-down direction, it is allowed to simplify the mechanism for driving the handling device 31 at the time of taking out the lenses 10 (circular members) of which at least the center positions in the right-and-left direction have been specified from the circular member-centering device 22.

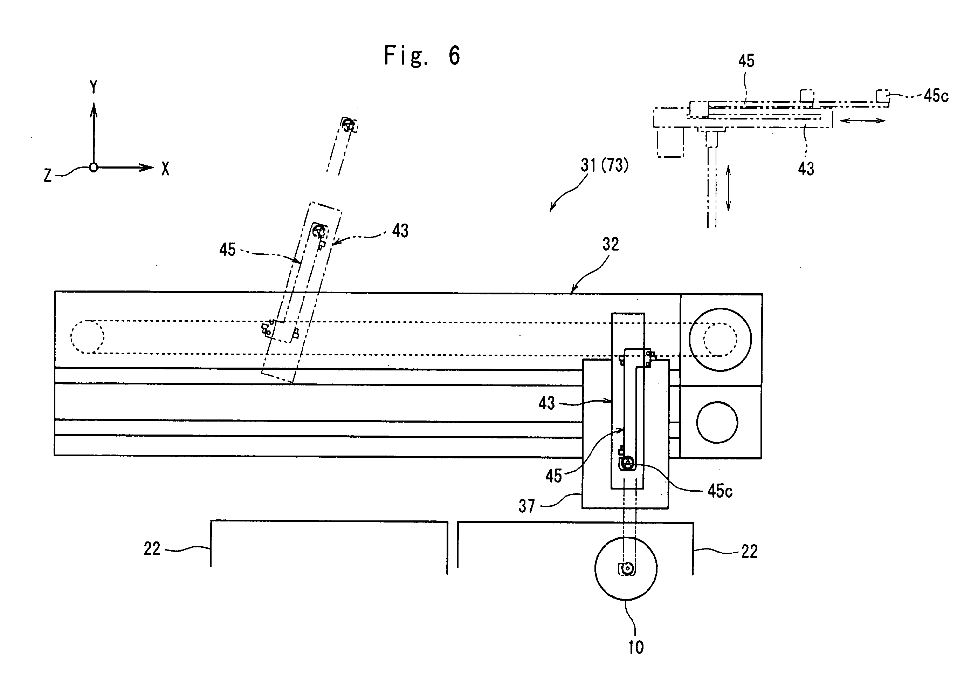

Fig. 6 illustrates the handling device 31. The handling device 31 has a slide unit 37 which moves from the one end side of an X-axis guide unit 32 to the other end side thereof in the lengthwise direction. The slide unit 37 is provided with a rotary unit 43 which rotates, and the rotary unit 43 is provided with the circular member-supporting unit 45 that moves back and forth in the back-and-forth direction and moves up and down in the up-and-down direction (an imaginary line in Fig. 6 is a side view of the circular member-supporting unit 45).
The circular member-supporting unit 45 has at its end an adsorbing portion 45c for supporting the bottom surface of the lens 10. The adsorbing portion 45c moves to the centering portion 27a under the lens 10, moves up, and passes through the penetration groove 27c to support the bottom surface of the lens 10 to thereby hand the lens 10 from the centering portion 27a over to the handling device 31.

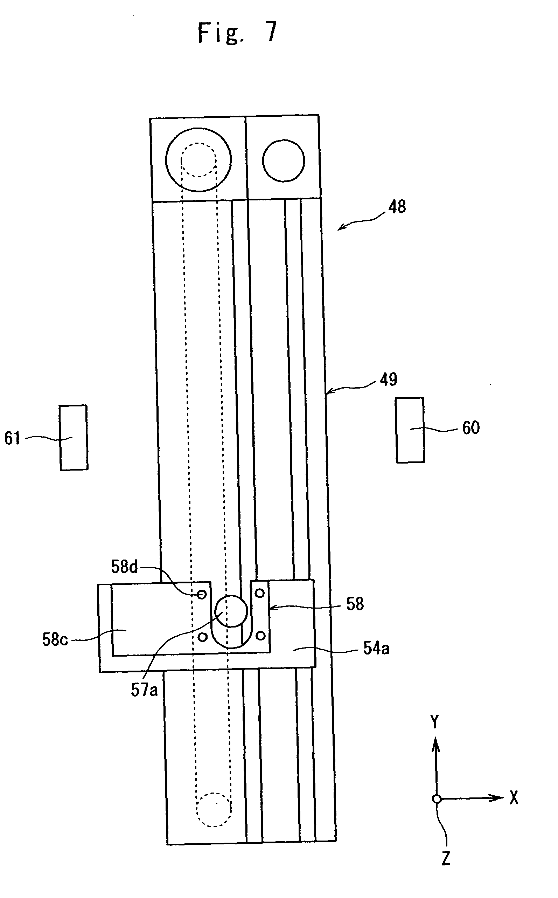

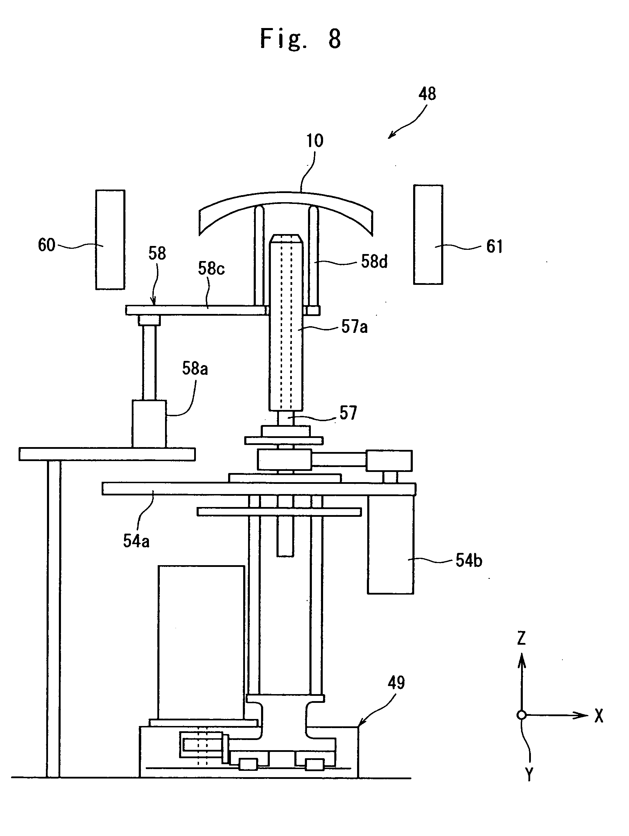

Fig. 7 and Fig. 8 illustrate the circular member-measuring device 48 disposed in the circular member-measuring portion 3. The circular member-measuring device 48 receives the lens 10 from the handling device 31 and detects the outer shape of the lens 10 or, concretely, detects the diameter, curvature and height thereof.
The circular member-measuring device 48'has a base plate 54a that moves from the one end side of the Y-axis guide unit 49 to the other end side thereof in the lengthwise direction. A circular member false-placing portion 58 is attached to the base plate 54a for false-placing the lens 10 thereon.
The false-placing portion 58 can be moved up and down by an air cylinder 58a. Four studded pins 58d are erected on the upper surface of the circular member support plate 58c. The circular member support plate 58c can be moved up and down by driving the air cylinder 58a. The studded pins 58d are arranged in a square shape, and at the central portion thereof is arranged the center of the centering rod 57a.
The centering rod 57a can also be rotated by a rotary shaft 57. The lens 10 can be placed on the studded pins 58d, and can be handed over to, or received from, the centering rod 57a by moving the false-placing portion 58 up and down. The centering rod 57a can be rotated being driven by a pulse motor 54b.
On both sides of the circular member-measuring device 48, a laser projection portion 60 is provided on one side and a laser receiving portion 61 is provided on the other side. If a laser beam is projected from the laser projection portion 60 toward the laser receiving portion 61, the laser beam is received by the laser receiving portion 61.

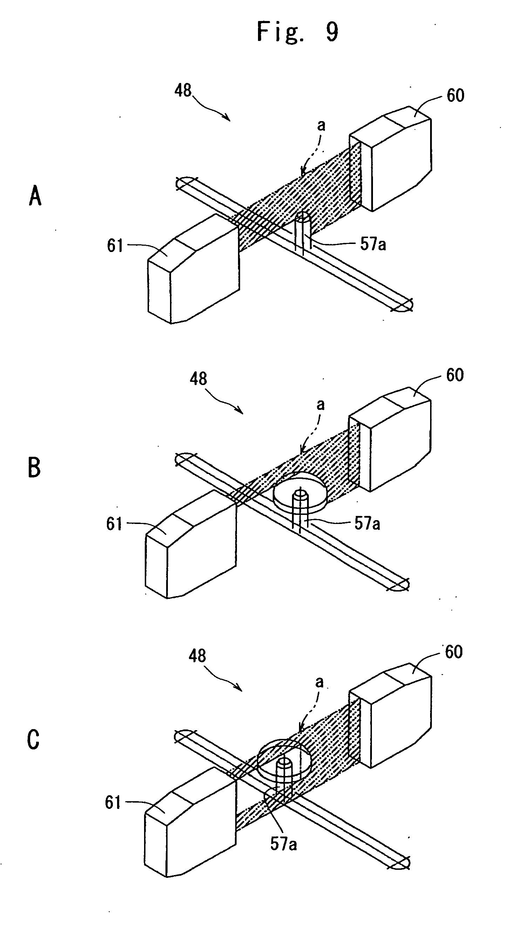

On both sides of the circular member-measuring device 48, as shown in Fig. 8, the laser projection portion 60 is provided on one side and the laser receiving portion 61 is provided on the other side being corresponded to the laser projection portion 60. If a laser beam is projected from the laser projection portion 60 toward the laser receiving portion 61, the laser beam is received by the laser receiving portion 61.
Referring to Figs. 9A to C, the lens 10 is fixed to the end of the centering rod 57a (support shaft) which is then rotated and moved straight to move the lens 10 into the measuring area a to detect the curvature, height and diameter (outer diameter) of the lens 10. The center position of the lens 10 in the back-and-forth direction can be correctly determined from the value of diameter of the lens 10.

The coating process line of the coating device 1 of this embodiment includes coating systems A and B which are of the same structure. Therefore, the following description deals with the one coating system A only shown in Fig. 1.
First main carrier means 62 is arranged in the first main carrier portion 4a of the coating device 1. An arm 63 is disposed on the first main carrier means 62 so as to slide in the X-axis direction, to rotate and to expand and contract. A handover hand 64 is connected to an end portion of the arm 63 and is allowed to rotate at the end position of the arm 63. An adsorbing portion 64a is formed at an end portion of the handover hand 64. The adsorbing portion 64a is allowed to move over a rotational range of 360 degrees accompanying the turn, expansion and contraction of the arm 63 and the turn of the handover hand 64. The handover hand 64 can receive the lens 10 from the false-placing portion 58 of the lens or circular member-measuring device 48, and can carry the lens 10 to the primer-coating portion 5, drying portion 6, photochromic-coating portion 7 and circular member false-placing portion 74 in this order.

In the primer-coating portion 5 shown in Fig. 1, there is disposed a primer-coating device 65 for coating the lens 10 with a primer coating solution. The primer-coating device 65 is provided with a rotary spin shaft 78 capable of supporting the lens 10. Upon being rotated by the spin shaft 78, the lens 10 is coated with the primer coating solution. The handover hand 64 is capable of handing the lens 10 over to, or receiving the lens 10 from, the spin shaft 78, and carries the lens 10 coated with the primer coating solution to the drying portion 6 shown in Fig. 1.
It is desired that the primer-coating portion 5 is sectionalized from other portions and is so constructed as to adjust the temperature and humidity therein.

As shown in Fig. 1, the drying portion 6 in the coating device 1 has studded pins 6a that serve as a placing portion for drying the lens, and dries the lens 10 for a predetermined period of time. The photochromic-coating portion 7 is provided with a photochromic-coating device 86 for applying a photocurable coating solution (e.g., photochromic coating solution). The photochromic-coating device 86 is provided with a spin shaft 85 for rotatably supporting the lens 10. Upon being rotated by the spin shaft 85, the lens 10 is coated with the photochromic coating solution.
It is desired that the photochromic-coating portion 7 is sectionalized from other portions and is so constructed as to adjust the temperature and humidity therein.
As shown in Fig. 1, second main carrier means 67 is arranged in the second main carrier portion 4b of the coating device 1. The arm 63 same as that of the first main carrier means 62 is disposed on the second main carrier means 67, and a handover hand 64 is connected to an end portion of the arm 63. The second main carrier means 67 hands over the lens 10 by disposing the lens 10 on the circular member false-placing portion 74, on the UV irradiation portions 8a, 8b, and on the product circular member false-placing portion 72 on which the product lens 10 after having been coated is to be false-plated.

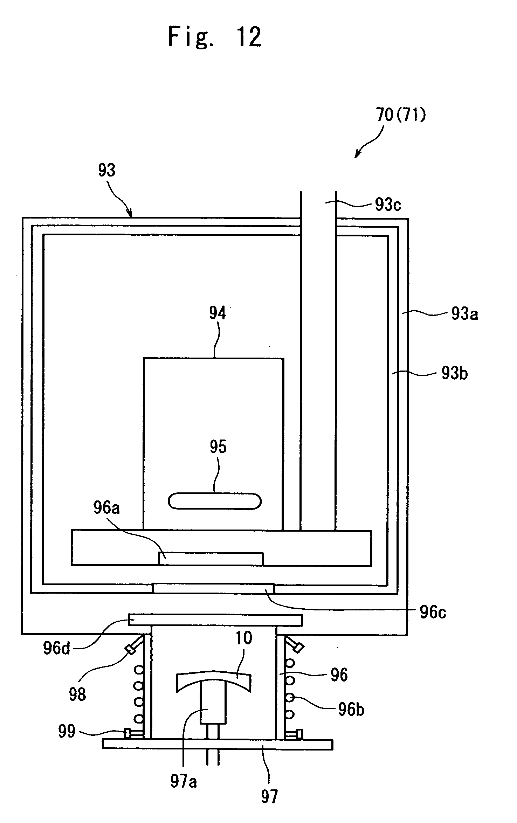

Fig. 12 illustrates a UV device 70 disposed in the UV irradiation portions 8a and 8b shown in Fig. 1. The UV device 70 is provided with an ultraviolet ray irradiation chamber 93 which has a light-shielding cover 93a arranged on the outer side, a heat-insulating member 93b arranged on the inside of the light-shielding cover 93a, and an exhaust duct 93c connected thereto. A UV unit 94 is arranged in the ultraviolet ray irradiation chamber 93, and a UV lamp 95 is arranged in the UV unit 94. A circular member accommodation chamber 96 made of a stainless steel is arranged under the UV device 70. The circular member accommodation chamber 96 has a stage 97 disposed at the lower portion thereof and accommodates the spin shaft 97a. The spin shaft 97a is rotatably supported on the stage 97 that can move up and down. When the stage 97 is arranged at the elevated position, the spin shaft 97a is accommodated in the circular member accommodation chamber 96. At the descended position of the stage 97, the lens is handed over.

A suction hole is formed in the central portion of the spin shaft 97a to suck the lens 10. A gas feed port 98 is provided at an upper part of the circular member accommodation chamber 96 to introduce N₂ into the circular member accommodation chamber 96, and N₂ is exhausted through a gas exhaust port 99 provided at a lower part of the circular member accommodation chamber 96.
The circular member accommodation chamber 96 is surrounded by a cooling pipe 96b wound like a coil. A window 96c made of a borosilicate glass for transmitting UV rays may be provided at an upper part of the circular member accommodation chamber 96, and windows 96a, 96d made of a quartz glass may be arranged over and under the window 96c.

By using the above circular member-centering device 22, the circular members can be easily centered. Though not diagramed, a plurality of spin shafts 97a can be provided in the circular member accommodation chamber 96 so that the plurality of lenses can be simultaneously irradiated with ultraviolet rays. In this case, the lenses are supported at the ends of the spin shafts 97a and are irradiated with the ultraviolet rays while rotating the spin shafts 97a. Here, it is desired to provide the circular member accommodation chamber 96 with a partitioning plate to prevent the coating solution from scattering and adhering on the surfaces of other lenses.
Further, though not diagramed, a reflector plate can be provided in the circular member accommodation chamber 96 so that the lenses are efficiently irradiated with the ultraviolet rays. In addition to providing the reflector plate, the interior of the circular member accommodation chamber 96 may be specularly machined (inclusive of the stage 97) for efficient irradiation with the ultraviolet rays.
The lens coated with the photocuring coating solution or, concretely, with the photochromic coating solution requires a long period of time for curing the coating solution by the UV device. Here, however, since a large quantity of lenses can be treated by using the circular member-centering device of the present invention, the UV device that is constituted as described above, too, exhibits an improved treating capability.

Next, the lenses 10 treated by the UV device 70 are carried by second main carrier means 67 to product circular member carrier means 72.
In the coating device 1 shown in Fig. 1, a product circular member storage portion 9 is disposed at a position downstream of the coating line of the device body 1a. The product circular member storage portion 9 is not necessarily required. The storage portion 9, however, includes a product circular member accommodation unit 75 and second sub-carrier means 73 for carrying the product circular members from the product circular member carrier means 72 to the product circular member accommodation unit 75. The second sub-carrier means 73 includes the same circular member supporting unit 45 as that of the handling device 31.
The coating device 1 is provided with a control device for controlling various units and for counting the timings for suitably receiving and handing over the lenses 10.

Next, the operation of the embodiment of the invention will be described.
In the following description as also described above, the lenses are coated. Therefore, the circular members are referred to as lenses but it should be noted here that the method of centering the circular members, i.e., determining the center positions is not limited to centering the lenses only.
First, the opening/closing door 21a (see Fig. 1) is opened, and the lenses 10 are set to the holding members 25a to 25f of the circular member-centering devices 22, 22 shown in Fig. 2 and Fig. 5. The diameters of the lenses 10 may have been measured in advance, or the diameters of the lenses 10 can be measured by using the circular member-measuring device 48 that will be described below in detail.
By rotating the circular eccentric cam 28 by turning the pulse motor coupled to the rotary shaft 28a of the circular eccentric cam 28, the holding member 25 is tilted from its initial position where the stepped portions are in the horizontal state to a state where the rear end side of the holding member 25 is lifted up (see Fig. 5) so that the stepped portions d are tilted to become lower toward the front side.
In this state, the operator opens the opening/closing door 21a to place the lenses on the chute portions 27b that are positioned in front of the circular member-centering devices 22, 22 and are formed in the rear end portions of the holding members 25. Here, the operator pays attention so as to place the lens 10 on the stepped portion d having the smallest radius (length) among the stepped portions d larger than the diameter of the lens 10. Since the stepped portion d is tilted, the lens 10 placed on the chute portion 27b slides onto the centering portion 27a from the chute portion 27b. Though the above description has dealt with the holding member 25 having steps, it is also allowable to use the holding member 25 without step, as a matter of course.

Both sides of the lens 10 come in contact with the limiting portions 27d positioned at the front end portions of the stepped portion d, and the lens 10 is, thus, positioned. In a state where the lens 10 is fed onto the centering portion 27a, the circular eccentric cam 28 is rotated; i.e., the position of the circular eccentric cam 28 is returned back to the initial position and the stepped portions d are placed to be horizontal. Therefore, the lens 10, too, is maintained horizontal. In a state where the lens 10 is transferred onto the centering portion 27a and is limited by the limiting portion 27d, at least the center of the lens 10 can be positioned in at least the right-and-left direction (X-axis direction in Fig. 3A). As for the positioning in the Y-axis direction, the center of the lens 10 comes in agreement with the center axis O in Fig. 3A if the radius of the lens 10 is in agreement with the radius of the stepped portion d. If the radius of the lens 10 is deviated from the radius of the corresponding stepped portion d, however, the center of the lens 10 is positioned being slightly deviated from the center axis O. After having set the lenses 10, the opening/closing door 21a is closed.

Next, described below is a method of handing the lens from the holding member 25a over to the adsorbing portion of the circular member supporting unit 45 in the handling device 31.
A penetration groove 27c is formed in the centering portion 27a of the holding member 25a penetrating through up and down from the front end of the centering portion 27a to a portion beyond the center point O. Through the penetration groove 27C, the adsorbing portion 45c of the circular member supporting unit 45 in the handling device 31 supporting the bottom surface of the lens. Thus, the lens 10 is easily taken out from the holding member 25.

As for positioning in the Y-axis direction, there can be employed either a method of measuring the lens diameter in advance (or when the lens diameter has been known in advance) or a method of measuring the lens diameter afterward by using the circular member-measuring device 48.
First, described below is the method of measuring the lens diameter, first, and, thereafter, attaining the positioning in the Y-axis direction.
The handling device 31 is controlled by the control portion, and the bottom surface of the lens 10 is supported at the center position thereof in the back-and-forth direction by the adsorbing portion 45 relying on the value of diameter of the lens 10 that has been measured in advance. Thus, the lens 10 can be easily centered (determined for its center position) .

Namely, upon measuring the diameter of the lens 10 in advance, a deviation from the center axis O to the center of the lens 10 can be learned from the relationship between the measured diameter of the lens 10 and the position of the limiting portion 27d for limiting the lens 10 and, therefore, the center position of the lens 10 can be known. The deviation of the center position may be operated by using a control device that is not shown. Based on the operated result, the adsorbing portion 45c of the circular member support unit in the handling device 31 that will be described below in detail is so controlled as to be brought to the center position (i.e., center position of the lens) of the lens 10 in the back-and-forth direction (Y-axis direction) to thereby determine the center position of the lens. This method is easy to control and can be favorably employed when the lenses to be treated all have the same diameter.
The lens 10 handed over to the adsorbing portion 45c of the circular member supporting unit 45 of the handling device 31 can be treated in its form through the subsequent steps. In carrying the lens to the next step, when the diameter of the lens (circular member) has not been measured in advance, the circular member can be measured for its outer shapes, such as diameter, height, curvature, etc. by using the circular member-measuring portion 3 to attain the centering. This will be described later.

Next, the lens 10 supported by the adsorbing portion 45c of the circular member supporting unit 45 is transferred to the circular member-measuring device 48 of the circular member-measuring portion 3 to measure the outer shapes of the lens 10, such as the diameter, curvature and height. To transfer the lens 10 from the handling device 31 to the circular member-measuring device 48 of the next step, the circular member-adsorbing portion 45c of the handling device 31 shown in Fig. 6 is moved (not shown) to just over the studded pins 58d shown in Fig. 8, and is lowered. The lens 10 is thus placed (false-plated) on the studded pins 58d. By lowering the studded pins 58d, the lens 10 is supported on the centering rod 57a.
The mechanism for handing over the lens 10 may be so constituted that the lens is directly handed over to the centering rod 57a of the circular member-measuring device 48 in the circular member-measuring portion 3. Desirably, however, the circular member is once false-placed on the false-placing portion 58. It is desired that the false-placing portion 58 comprises at least three studded pins 58d (four studded pins in this embodiment).

Upon providing the false-placing portion 58, the lens can be easily handed over. Besides, even without measuring the diameter of the lens 10 in advance, the lens 10 of which the central position (center position in the X-axis direction and in the Y-axis direction) is determined can be reliably positioned in the next step by utilizing the false-placing portion 58.
Though not diagramed, further, the lens is handed over by similarly using the false-placing portion 58 to the spin shaft 78 of the primer-coating device 65 that applies the primer onto the surface of the lens 10 in the step next of the circular member-measuring portion 3, to the spin shaft 85 of the photochromic-coating device 86, to the drying portion 6, and to the spin shaft 97a of the UV device 70, 71.

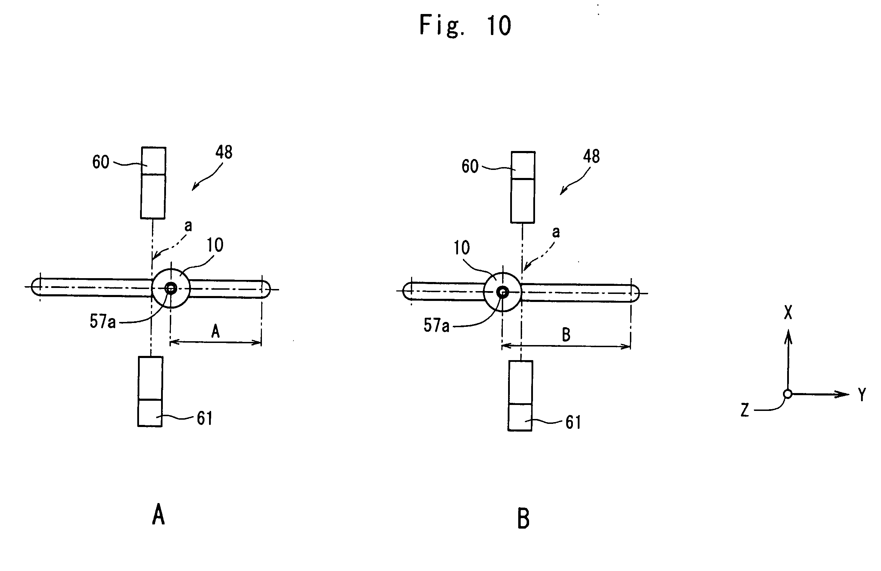

The lens 10 supported by the centering rod 57a moves in the Y-axis direction in Fig. 1, and moves onto a measuring area a where the outer shapes of the lens 10 are measured as shown in Fig. 9.
In the measuring area a of the circular member-measuring device 48 as shown in Fig. 10, a laser projection portion 60 and a laser receiving portion 61 are arranged on both sides of the centering rod 57a to which end the lens 10 is fixed. As the centering rod 57a passes through the measuring area a, the curvature, height and diameter of the lens are measured. If the lens 10 is placed between the laser projection portion 60 and the laser receiving portion 61, i. e., if the lens 10 is placed in the measuring area a, light is interrupted by the lens 10, and the length the light is interrupted (or the length the light is not interrupted) can be measured. Further, the centering rod 57a can be rotated and moved straight, and the circular member-measuring device 48 can specify the rotational angle of the centering rod 57a and the amount of straight movement thereof to obtain a present value thereof.

Next, described below is a method of determining the diameter and the center position of the lens 10 of which the diameter has not been known by using the circular member-measuring device 48.
To measure the diameter of the lens 10 as shown in Fig. 10, a distance (A) the centering rod 57a has moved is measured at a moment when the lens 10 supported at an end portion of the centering rod 57a has entered the measuring area a (see Fig. 10A). The centering rod 57a is, further, moved and a distance (B) the centering rod 57a has moved is measured at a moment when the lens goes out from the measuring area a (see Fig. 10B). The diameter of the lens 10 can be found by subtracting the distance (A) of movement from the distance (B) of movement. Since the center position in the X-axis direction has been determined by the circular member-centering device 22 as described above, the diameter of the lens 10 can be correctly measured relying on the distance of movement in the Y-axis direction.

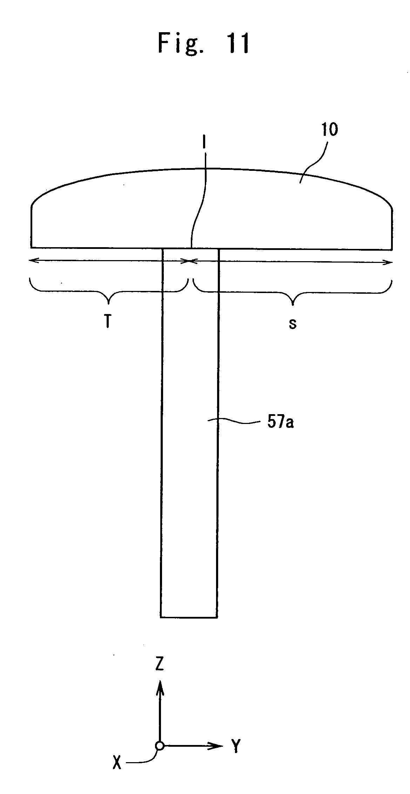

To determine the center position of the lens 10 as shown in Fig. 11, the center position I of the centering rod 57a is measured in advance by the control portion. Next, a length (S) to the center position (I) of the centering rod 57a is measured from a moment when the lens 10 has entered the measuring area a, and a length (T) from the center position (I) of the centering rod 57a is measured till a moment when the lens has gone out of the measuring area a. The lengths (S) and (T) become equal to each other if the center of the lens in the Y-axis direction (back-and-forth direction of the lens) is in agreement with the center position (I) of the centering rod 57a. If the center position in the Y-axis direction (back-and-forth direction of the lens) is not in agreement with the center position (I) of the centering rod 57a, however, either length becomes longer. By measuring the difference between the lengths (S) and (T), it is made possible to confirm the center position [(S - T) ÷ 2] in the Y-axis direction. Since the center position in the X-axis direction has been determined by the circular member-centering device 22 as described above, the center of the lens 10 can be determined by learning the center of the lens diameter in the Y-axis direction.
As for the lens 10 of which the diameter has been determined in advance, the central portion of the lens 10 is found by the circular member-centering device 22 as described above, and the centering step is not effected for the lens 10.

Even if the lens diameter has not been measured in advance, therefore, the center position of the circular member in the Y-axis direction (back-and-forth direction) can be confirmed by using the circular member-measuring device 48.
When there is a deviation in the Y-axis direction, the lens 10 is handed from the centering rod 57a over to the false-placing portion 58 by adjusting the deviation or is handed over to the circular member-adsorbing portion 45c of the handling device 31 making it possible to confirm the center position of the lens 10 in the X-axis direction and in the Y-axis direction at the false-placing portion 58. When the false-placing portion 58 is not provided, the deviation may be directly adjusted at the time when the lens 10 is handed over to the next step.
According to the above method, the center position of the lens 10 of, for example, before being coated can be easily determined and, therefore, the coating treatment can be efficiently effected. Further, even when the lenses having slightly different sizes are to be successively treated, the center positions can be determined relying upon the above method to efficiently determine the centers of the circular members.
In addition to measuring the diameters of the lenses, the circular member-measuring device 48 can be used for measuring the curvatures and heights of the lenses to use these values in the subsequent coating treatment, e.g., for determining the position of the coating nozzle, for determining the distance of movement of the auxiliary means, etc. The method of measuring the curvature and height of the lenses 10 is not described in this embodiment.

The center axis of the lens 10 can be determined in an electrically controlled manner by using a sensor causing, however, the operation for moving the lens 10 to become complex and requiring an extended period of time for the measurement. According to this embodiment, on the other hand, either when the diameter of the lens 10 is measured in advance or when the diameter of the lens 10 is measured by using the circular member-measuring device 3, the center of the lens 10 in the right-and-left direction (X-axis direction in Fig. 3) is mechanically found, and the center position in the Y-axis direction shown in Fig. 3 is found by operation or by measuring the diameter of the lens. Therefore, the time required for finding the center axis of the lens 10 is substantially 0 second.
According to the present invention, since it is made possible to efficiently center the circular members, it is allowed to treat, for example, large quantities of lenses in the subsequent steps. As a result, it is made possible, for example, to effect the coating treatment in a plurality of systems.

The lens 10 that is positioned at its central portion is carried by the handover hand 64 of the first main carrier means 62 shown in Fig. 1 to the primer-coating portion 5 of the next step and where the primer is applied. At the primer-coating portion 5, the surface of the lens 10 is coated with the primer coating solution by the primer-coating device 65.
After the primer-coating treatment has been finished, the handover hand 64 carries the lens 10 to the drying portion 6 where the coating solution is dried for a predetermined period of time.
After having been dried, the lens 10 is carried by the first main carrier means 62 to the photochromic-coating portion 7. At the photochromic-coating portion 7, a photocurable coating solution (photochromic coating solution) is applied onto the surface of the lens by the photochromic-coating device 86. After the photochromic-coating treatment has been finished, the lens 10 is once placed by the first main carrier means 62 on the circular member false-placing portion 74 and is, thereafter, handed over to the handover hand 64 of the second main carrier means 68.
In the second main carrier means 68, the handover hand 64 is carried into the ultraviolet ray irradiation chamber 93 of UV device 70 in the UV irradiation portion 8a, 8b. In the ultraviolet ray irradiation chamber 93, the lens 10 is irradiated with ultraviolet rays from the UV lamp 95, and the photochromic coating solution is cured.
Next, the lens 10 treated by the UV device 70 is carried by the second main carrier means 67 to the product circular member false-placing portion 72 that is forming the false-placing portion by using the studded pins 72a. The lens 10 is carried to the circular member-holding portion 75a of the circular member accommodation unit 75 via the circular member supporting unit 45 of the second sub-carrier means 73. The opening/closing door 21b of the product circular member storage portion 9 is opened, and the product is taken out from the circular member accommodation portion 75a.

According to this embodiment, as described above, even the lenses 10 that do not fit to the diameters of the stepped portions d1 to d5 of the holding members 25a to 25f can be accommodated in the stepped portions d larger than the diameters of the lenses eliminating the operator's work for equalizing the gap between the outer circumferences of the lenses 10 and the arcs of the stepped portions d, and making it possible to shorten the working time for centering the lenses 10.
As a result of shortening the working time, it is made possible to provide two coating systems A and B, to provide a plurality of UV devices 70, 71, and to treat a plurality of lenses simultaneously using a single UV device to mass-produce the coated lenses 10.
In this embodiment, the lenses 10 were alternately carried onto the coating system A and the coating system B. When, for example, the primer coating solution or the photochromic coating solution is to be replaced, either coating system may be halted while the other coating system continues the operation.
In either coating system, further, the primer-coating portion 5 or the photochromic-coating portion 7 may be manually operated for replenishing the coating solution or for repairing the device by being separated away from other portions that are being automatically operated (continuously operated). In this case, the coating solution can be replenished or the devices can be repaired, a false-placing portion (not shown) for arranging a plurality of lenses 10 can be provided in front of the primer-coating portion 5, or a plurality of lenses 10 can be arranged in the drying portion 6 prior to transferring the lenses 10 to the primer-coating portion 5 or the photochromic-coating portion 7. Upon providing the false-placing portion or arranging many lenses 10 in the drying portion 6, it becomes easy to operate the primer-coating portion 5 or the photochromic-coating portion 7 being linked to other portions after the coating solution has been replenished or after the devices have been repaired.
As for means for swinging (tilting) the holding members 25a to 25f in the present invention, further, it is possible to employ, in addition to the above-mentioned cam mechanism, any other mechanism by utilizing a cylinder or a motor, as a matter of course. In the present invention, it is important that the holding members 25a to 25f are swung (tilted) in a manner that the centering portion becomes low. Describing, for example, the holding member 25a, it is also possible to attach the support shaft 26 to a lower end portion of the holding member 25a on the side of the chute portion 27b (on the rear side), and to attach an auxiliary member that moves up and down to the centering portion 27a (front side) to thereby tilt the holding member 25a by moving the auxiliary member up and down.

By using the circular member-centering device of the invention as described above, the coating device 1 of the embodiment makes it easy to attain the centering of the circular members such as lenses. Therefore, the centering work can be efficiently conducted, and a large quantity of circular members (lenses) can be centered (determined for their center positions) within short periods of time. As a result, the treatment can be conducted by providing the after-treating steps in a plurality of systems (e.g., A and B).

## Claims

1. A device for centering circular members comprising:
a holding member for holding circular members, said holding member having a portion for centering the center axis of the circular member on the front side and a chute portion for feeding the circular member to said centering portion on the rear side;
said centering portion having a semicircular portion of a given radius, a front end portion of said centering portion forming a limiting portion for specifying the center position of said circular member in the right-and-left direction thereof which is at right angles with the back-and-forth direction of said holding member; and
said holding member being provided with lift means which so tilts the holding member that said semicircular portion side becomes low and said chute portion side becomes high, and said holding member being so tilted that the circular member is transferred from said chute portion to the limiting portion of said centering portion.

2. The device for centering circular members according to claim 1, wherein the semicircular portion of said centering portion forms stepped portions like a stairway having diameters increasing from the lower side toward the upper side in a manner of forming a plurality of said semicircular portions in concentric, said stepped portions being continuously formed from both end positions of the arcuate portions of the semicircular portions up to said chute portion on the rear side; and
limiting portions are formed at the front end portions of the stepped portions of the centering portion so as to specify the center positions of said circular members in the right-and-left direction which is at right angles with the back-and-forth direction of said holding member.

3. The device for centering circular members according to claim 1, further including a handling device for moving the circular member that is transferred to the limiting portion of said centering portion; wherein
a groove is formed penetrating up and down from a front end position of said centering portion to a center portion thereof, and an end of an adsorbing portion of said handling device that supports the bottom surface of said circular member moves up from under said centering portion, passes through said groove, and hands said circular member from said centering portion over to the adsorbing portion of the handling device.

4. The device for centering circular members according to claim 3, wherein said handling device is controlled by a control portion, and said control portion decides the center position of said circular member in the back-and-forth direction thereof from the size of the circular member that has been input in advance.

5. The device for centering circular members according to claim 1, further including a circular member-measuring device for measuring the diameter of the circular member, wherein the center position of said circular member in the back-and-forth direction thereof is decided from a value of diameter measured by said circular member-measuring device

6. The device for centering circular members according to claim 1, wherein said circular member is a starting material for a coated lens.

7. A coating device equipped with the device for centering circular members of claim 1, wherein said lens is held with its surface facing upward on a spinning device that supports and spins said lens, in order to apply a photocurable coating solution onto the upper surface of the lens held on said spinning device.

8. The coating device according to claim 7, wherein said photocurable coating solution is a photochromic coating solution.

9. The coating device according to claim 7, wherein the photocurable coating solution is applied onto a primer coating that has been formed on the lens.

10. A method of centering circular members by using a device for centering circular members comprising a holding member having a portion for centering the center axis of the circular member on the front side and a chute portion for feeding the circular member to said centering portion on the rear side, said centering portion having a semicircular portion of a given radius, a front end portion of the centering portion forming a limiting portion for specifying the center position of said circular member in the right-and-left direction which is at right angles with the back-and-forth direction of said holding member, wherein said holding member is so tilted that said centering portion becomes low so that said circular member placed on said chute portion slides from said chute portion down to said centering portion, and said circular member is brought into contact with the limiting portion of said centering portion to specify the center position of said circular member in the right-and-left direction thereof.

11. The method of centering circular members according to claim 10, wherein the center position of said circular member in the back-and-forth direction thereof is determined by the operation of a control portion from a relationship between the size of said circular member measured in advance and the position of said limiting portion, the handling means controlled by said control portion is moved to move a portion for supporting the circular member of said handling means to just under the center portion of said circular member, and the portion for supporting said circular member is moved up so that the portion for supporting said circular member supports the center portion of said circular member on the bottom surface side thereof.

12. The method of centering circular members according to claim 10, wherein the handling means controlled by the control portion is moved to said centering portion, the portion for supporting the circular member of said handling means is moved to just under the center position of said circular member in the right-and-left direction thereof, the portion for supporting said circular member is moved up so that the portion for supporting said circular member supports the center position of said circular member in the right and-left direction on the bottom surface side thereof, and the portion for supporting said circular member is moved to the circular member-measuring device to hand the circular member over to a centering rod of the circular member-measuring device; and
said circular member-measuring device measures a length (S) of from the center axis of said centering rod to the one end of said circular member in the back-and-forth direction and a length (T) of from the center axis of said centering rod to the other end of said lens in the back-and-forth direction, determines a deviation of the center position of the circular member in the back-and-forth direction from a difference between the lengths, and attains the center position of said circular member.
